# DEMANDE DE BREVET EUROPEEN

(11) **EP 4 821 815 A1**
(43) Date de publication de la demande: **14.10.2026**
(21) Numéro de dépôt: 26168486.4
(22) Date de dépôt: 27.03.2026
(51) Int. Cl.: B64D 11/06

(54) **SÉPARATEUR À PANNEAUX MOBILES POUR SIÈGES CÔTE À CÔTE D'AÉRONEF**

(30) Priorité: 08.04.2025 FR 2503717
(71) Demandeur: Airbus Atlantic, 17300 Rochefort (FR)
(72) Inventeur: VIGNON, Laurent, 17300 Rochefort (FR)
(74) Mandataire: Santarelli

(57) **Abrégé**

Séparateur (100) d'espaces entre deux sièges adjacents pour passagers d'aéronef, comprenant plusieurs panneaux (11, 12, 13) mobiles et un logement (20), ledit séparateur présentant une position fermée dans laquelle les panneaux sont déployés pour former une cloison (10) rigide séparant les deux sièges et une position ouverte dans laquelle les panneaux sont rétractés et stockés dans le logement (20) laissant communicants les deux sièges ; les panneaux (11, 12, 13) étant configurés pour être, en position fermée, alignés verticalement dans un même plan, et en position ouverte, rangés dans le logement (20) selon des plans parallèles distincts juxtaposés, le passage d'une position à l'autre étant assuré par un mécanisme d'actionnement comprenant au moins un moteur (311) entraînant un axe (115) traversant un premier panneau (11), et des moyens de guidage (316, 317, 326, 327) contraignant les panneaux à se déplacer verticalement et à s'aligner ou à se juxtaposer automatiquement.

## Description

### DOMAINE TECHNIQUE

La présente invention appartient au domaine des équipements d'aménagement des cabines d'avions, notamment les séparateurs d'espaces (plus connus en anglais sous le nom « *dividers* »). Elle concerne plus particulièrement un séparateur à plusieurs panneaux mobiles pour séparer des sièges côte à côte. L'invention trouve une application directe, mais non exclusive, dans les sièges passagers de la classe affaires (*Business class*).

### ÉTAT DE L'ART

En aviation commerciale, la séparation entre les passagers, en particulier en classe affaires, a toujours représenté un défi technique pour les concepteurs. Historiquement, les solutions adoptées incluaient principalement des rideaux suspendus à des rails, servant à délimiter les différentes classes de service au sein de la cabine. Cependant, ces rideaux présentaient des inconvénients notables, notamment une isolation visuelle insuffisante, une esthétique discutable et une durabilité limitée due à l'usure mécanique. De plus, ces solutions ne sont pas adaptées à des sièges adjacents pour séparer des passagers côte à côté, un rideau n'étant pas une paroi rigide, les mouvements d'un passager peuvent ainsi gêner l'autre passager.

Avec l'évolution des attentes des passagers en matière de confort et de confidentialité, des cloisons rigides ont été introduites. Par exemple, le document EP0361717 décrit un séparateur composé de panneaux individuels attachés à un cadre mobile le long de la cabine. Chaque panneau est fixé au sommet d'un siège inclinable et relié au cadre par un mécanisme extensible-rétractable, permettant au panneau de maintenir une position constante malgré l'inclinaison du siège. Malgré le fait que cette conception améliore la stabilité et l'intégration avec les sièges, elle présente des limitations en termes de flexibilité et d'adaptabilité aux diverses configurations de sièges.

D'autres solutions ont tenté d'optimiser l'utilisation de l'espace tout en améliorant le confort des passagers. Le document US8167244 propose une cloison de classe pour cabine d'avion, positionnée immédiatement derrière une rangée de sièges, intégrant des fonctionnalités telles que des moniteurs vidéo et des tablettes pour les passagers assis juste derrière la cloison. Néanmoins, cette approche est principalement axée sur la séparation des classes de service et n'aborde pas directement la question de la séparation modulable entre passagers adjacents en classe affaires.

Des concepts plus récents introduisent des sièges de type canapé pouvant se transformer en lits, offrant une surface de couchage plus large. Cependant, ces designs se concentrent davantage sur l'amélioration du confort d'installation du passager (position assise et position allongée) et n'intègrent pas nécessairement de solutions pour une séparation efficace et modulable entre deux passagers souhaitant plus d'intimité.

De manière générale, les dispositifs de séparation actuellement proposés pour la classe affaires d'un aéronef souffrent de plusieurs lacunes techniques importantes lorsqu'ils doivent concilier simultanément les exigences de modularité, de confort maximal et de simplicité de conception. En effet, les séparateurs existants ne sont pas capables d'offrir une intégration parfaite avec les sièges lorsqu'ils sont en position lit. Il en résulte qu'une partie significative du séparateur demeure au-dessus du niveau de couchage lorsque les sièges sont entièrement déployés, créant ainsi une gêne physique pour les passagers souhaitant utiliser deux sièges adjacents comme un lit double, notamment lorsqu'il s'agit de couples voyageant ensemble. Cette gêne se matérialise principalement au niveau des extrémités, c'est-à-dire à la tête ou aux pieds des passagers, en raison de la structure rigide du caisson ou du panneau qui reste en saillie au-dessus du plan horizontal formé par les sièges dépliés.

De plus, les séparateurs existants présentent souvent une complexité mécanique non négligeable, induisant un risque accru de dysfonctionnement. Cette complexité découle notamment de l'accumulation d'éléments mécaniques mobiles et de mécanismes internes difficiles d'accès lors des opérations de maintenance, augmentant ainsi le temps et le coût d'entretien. La multiplicité des pièces composant ces séparateurs entraîne également un surpoids inutile, ce qui est particulièrement problématique dans le secteur aéronautique où chaque kilogramme supplémentaire impacte directement la consommation de carburant et les performances globales de l'aéronef.

Enfin, il existe aujourd'hui une réelle difficulté à concilier les exigences opposées que représentent d'une part, un séparateur suffisamment haut pour garantir une intimité complète lorsque les passagers ne se connaissent pas et, d'autre part, une hauteur minimale voire inexistante du séparateur lorsqu'il est désactivé afin de permettre aux passagers se connaissant d'utiliser pleinement et sans entrave toute la surface de couchage formée par deux sièges adjacents.

À la connaissance du demandeur, aucune solution actuelle n'offre une séparation parfaitement escamotable sous le niveau horizontal formé par les sièges déployés en lit, sur toute la longueur de couchage disponible, tout en permettant d'atteindre une hauteur maximale lorsque le séparateur est en position déployée.

Ainsi, les solutions antérieures ont oscillé entre des rideaux flexibles mais insuffisants en termes d'isolation, et des cloisons rigides offrant une meilleure séparation mais manquant de modularité. Aucune de ces approches n'a pleinement réussi à combiner une séparation efficace, une intégration harmonieuse avec les sièges en position allongée, une facilité de maintenance et une adaptabilité aux préférences des passagers voyageant ensemble ou séparément, tout en répondant aux contraintes fondamentales d'encombrement, de poids et de simplicité mécanique essentielles au secteur aéronautique.

### PRÉSENTATION DE L'INVENTION

La présente invention vise à pallier tout ou partie des inconvénients de l'art antérieur exposés ci-avant en proposant une solution innovante, permettant d'obtenir une cloison séparatrice rigide occupant une hauteur maximale en position déployée, tout en offrant un rangement compact et entièrement dissimulé sous la surface de couchage, ainsi qu'un mécanisme simplifié garantissant fiabilité, facilité de maintenance et légèreté.

À cet effet, la présente invention a pour objet un séparateur d'espaces entre deux sièges adjacents pour passagers d'aéronef, comprenant plusieurs panneaux mobiles et un logement, ledit séparateur présentant une position fermée dans laquelle les panneaux sont déployés pour former une cloison rigide séparant les deux sièges et une position ouverte dans laquelle les panneaux sont rétractés et stockés dans le logement laissant communicants les deux sièges. Ce séparateur est remarquable en ce que les panneaux sont configurés pour, en position fermée, être alignés dans un même plan et, en position ouverte, être juxtaposés parallèlement selon des plans distincts ; et en ce qu'il comprend un mécanisme d'actionnement assurant le passage d'une position à l'autre et comprenant au moins un moteur entraînant un axe traversant un premier panneau, et des moyens de guidage contraignant les panneaux à se déplacer verticalement et à s'aligner ou à se juxtaposer automatiquement durant leur déplacement.

Cette configuration une séparation rigide maximale entre passagers tout en assurant un rangement compact et invisible en position ouverte, grâce à un mécanisme simple.

Selon un mode de réalisation, les moyens de guidage comprennent un premier ensemble de tôles et un deuxième ensemble de tôles, lesquels ensembles étant parallèles et placés d'un côté et de l'autre des panneaux, lesdites tôles comportant des fentes oblongues dans lesquelles coulissent des bagues de guidage solidaires des panneaux, permettant un entraînement successif desdits panneaux lors de leur déplacement.

Cela permet d'assurer une transmission progressive du mouvement entre panneaux, évitant tout blocage ou décalage lors du déploiement ou du repliement. Plus particulièrement, les fentes oblongues présentent des extrémités inférieures comprenant des bifurcations latérales configurées pour contraindre chaque panneau à se positionner automatiquement dans un plan spécifique lors du rangement dans le logement.

Cela permet un rangement ordonné automatique des panneaux, assurant une parfaite répétabilité de leur position et simplifiant les opérations d'ouverture et de fermeture.

Selon un mode de réalisation, le moteur est fixé sur un support monté mobile verticalement par rapport à un premier caisson au moyen d'une liaison pignon-crémaillère comprenant un pignon monté sur l'axe entraîné par le moteur, et une crémaillère fixe solidarisée au premier caisson.

Plus particulièrement, l'axe comprend à son extrémité opposée au moteur un second pignon coopérant avec une seconde crémaillère fixe, ladite seconde crémaillère étant intégrée à un deuxième caisson, garantissant un entraînement symétrique de l'axe et évitant tout phénomène d'arc-boutement.

Cette symétrie du mouvement apporte une stabilité des panneaux pendant leur déplacement, éliminant les risques de blocage.

Selon un mode de réalisation, chaque panneau présente, sur au moins l'un de ses bords horizontaux, un profil complémentaire formant en position fermée un assemblage par recouvrement à feuillure avec un panneau adjacent, assurant ainsi une rigidité et une isolation visuelle maximale de la cloison.

Selon un mode de réalisation, le logement est configuré pour stocker les panneaux en position ouverte selon une hauteur égale à la hauteur d'un seul panneau, réduisant ainsi l'encombrement vertical du séparateur en position ouverte.

Cela facilite l'intégration du séparateur dans l'espace restreint disponible sous les sièges.

Selon un mode de réalisation, les panneaux sont au nombre de trois, un panneau intermédiaire étant disposé, en position ouverte, dans un plan central situé entre deux plans latéraux respectivement occupés par les deux autres panneaux, formant ainsi une configuration compacte de rangement en sandwich dans le logement.

L'invention a également pour objet une unité de sièges pour passagers d'aéronef, comprenant deux sièges adjacents convertibles en lit et un séparateur tel que présenté, placé entre les deux sièges.

Avantageusement, le logement est disposé sous une surface horizontale formant une surface de couchage des sièges en position lit, de sorte que les panneaux, lorsqu'ils sont rangés dans ledit logement, restent intégralement sous ladite surface de couchage ; et la cloison formée par les panneaux déployés en position fermée s'étend longitudinalement selon une longueur correspondant à la totalité de la longueur de ladite surface de couchage.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un séparateur à panneaux mobiles, conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : une vue en perspective d'un séparateur en position fermée selon un mode de réalisation de l'invention ;
- Figure 2 : une vue en perspective du séparateur en position ouverte ;
- Figure 3 : une vue de dessus du séparateur en position fermée (a) avec les panneaux superposés dans un même plan, et en position ouverte (b) avec les panneaux juxtaposés parallèlement ;
- Figure 4 : une vue isolée et en perspective des panneaux du séparateur en position fermée formant une cloison coplanaire, avec une vue de détail sur le recouvrement entre panneaux successifs ;
- Figure 5 : une vue isolée et en perspective des panneaux du séparateur en position ouverte, rangés parallèlement sur une hauteur réduite ;
- Figure 6 : un schéma cinématique du séparateur en position ouverte ;
- Figure 7 : un schéma cinématique du séparateur en position fermée ;
- Figure 8: une vue de détail sur les extrémités inférieures des fentes oblongues coopérant avec des bagues de guidage des panneaux ;
- Figure 9 : un schéma de déplacement des panneaux entre la position fermée et la position ouverte, montrant le fonctionnement des moyens de guidage ;
- Figure 10 : une vue partielle du mécanisme d'actionnement dans le premier caisson du séparateur en position fermée ;
- Figure 11 : une vue partielle du mécanisme d'actionnement dans le premier caisson du séparateur en position ouverte ;
- Figure 12 : une vue partielle du mécanisme d'actionnement dans les deux caissons opposés du séparateur en position fermée.

### DESCRIPTION DÉTAILLÉE DE MODES DE RÉALISATION

Dans le mode de réalisation décrit ci-après, on fait référence à un séparateur à panneaux mobiles destiné à être installé entre deux sièges adjacents d'aéronef, permettant aux passagers d'être isolés visuellement et physiquement lorsqu'ils ne se connaissent pas, tout en offrant la possibilité d'une ouverture complète et d'une intégration parfaite sous la surface de couchage formée par ces mêmes sièges lorsqu'ils sont convertis en lit double. Ce séparateur est particulièrement adapté aux sièges passagers de la classe affaires d'un avion de ligne, mais peut être utilisé dans un autre véhicule de transport offrant un même niveau de confort et de service.

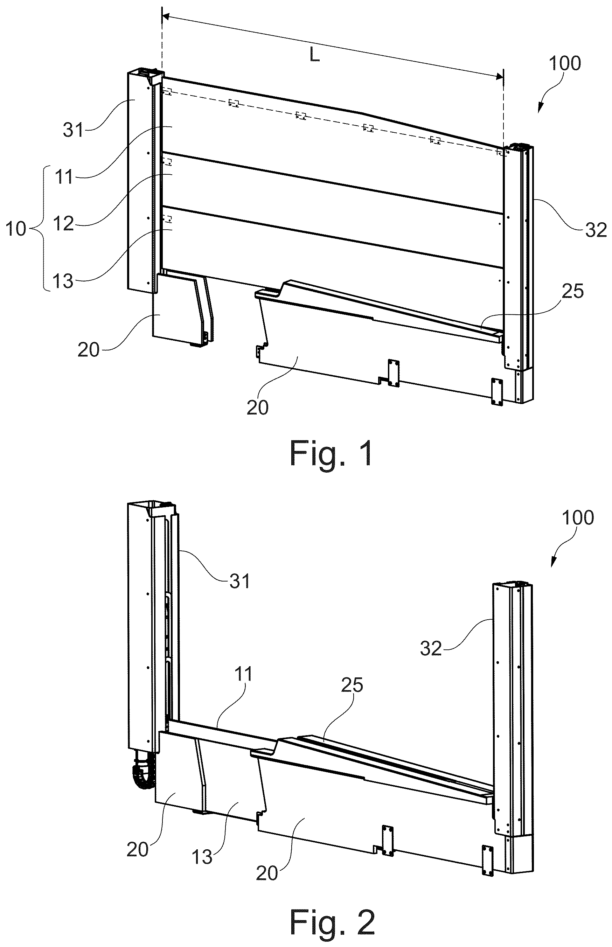

La figure 1 représente un séparateur 100 destiné à être installé entre deux sièges adjacents, non représentés, illustré ici en position fermée. Le séparateur 100 comporte trois panneaux mobiles 11, 12 et 13, formant une cloison 10. Ces panneaux présentent une géométrie globalement rectangulaire et sont disposés dans un même plan vertical de manière à constituer ensemble une surface uniforme et continue, assurant ainsi une séparation visuelle et physique optimale entre les deux passagers lorsque le séparateur 100 est dans cette position fermée.

Les trois panneaux 11, 12 et 13 sont configurés pour se déplacer les uns par rapport aux autres, permettant leur rangement compact et discret dans un logement de stockage 20 lorsque le séparateur 100 est en position ouverte. Ce logement 20, situé sous la surface horizontale formée par les sièges adjacents, présente une hauteur réduite afin de pouvoir être aisément dissimulé sous la surface de couchage des sièges en position lit, tout en offrant une capacité de stockage adaptée pour recevoir l'intégralité des panneaux 11, 12, 13 empilés parallèlement.

Le logement 20 présente par ailleurs une extension longitudinale supérieure 25, conformée pour s'adapter au mieux à la forme des sièges.

Le séparateur 100 comprend en outre deux caissons verticaux, un premier caisson 31 et un deuxième caisson 32, disposés respectivement aux extrémités gauches et droites des panneaux 11, 12 et 13. Ces caissons 31, 32 renferment chacun une partie d'un mécanisme d'actionnement permettant le déploiement et le repliement des panneaux 11, 12 et 13 entre leur position déployée (fermée) et leur position rangée (ouverte). Ces mécanismes internes seront détaillés ultérieurement en référence aux figures suivantes.

Les caissons verticaux 31 et 32 sont destinés à être fixés rigidement à l'environnement structurel immédiat des sièges adjacents. Ils garantissent une stabilité mécanique suffisante pour supporter les efforts liés à la manipulation répétée des panneaux.

La cloison 10 formée par les panneaux mobiles 11, 12, 13 s'étend longitudinalement sur une longueur L correspondant à l'intégralité de la longueur de la surface de couchage disponible lorsque les sièges adjacents sont convertis en position lit. À titre d'exemple non limitatif, cette longueur L peut s'étendre depuis le sommet du dossier jusqu'à un ottoman prolongeant l'assise, permettant ainsi une séparation complète des passagers, sans discontinuité, sur toute la longueur utile de couchage offerte par les sièges en position lit.

Des variantes peuvent prévoir un ajustement de la hauteur et de la largeur des panneaux pour s'adapter précisément à différents modèles et configurations de sièges passagers.

La figure 2 représente le séparateur 100 dans sa position ouverte. Dans cette configuration, les panneaux mobiles 11, 12 et 13 (le panneau 12 étant masqué dans cette vue car se trouvant derrière le panneau 11) sont entièrement rangés dans le logement de stockage 20, de sorte que leur présence ne génère aucune gêne ou discontinuité au-dessus de la surface de couchage des sièges adjacents. Plus précisément, les panneaux sont juxtaposés parallèlement les uns par rapport aux autres au sein du logement 20, formant ainsi un ensemble particulièrement compact permettant une réduction significative de l'encombrement vertical sous les sièges. Le panneau 11, ici visible dans sa partie supérieure, est ainsi positionné dans un plan central, tandis que le panneau 13, visible à l'avant-plan, est déplacé dans un premier plan latéral. Le dernier panneau (non visible ici) vient se loger selon un plan latéral de l'autre côté du plan central, assurant ainsi un rangement optimisé en configuration sandwich.

Le logement 20, doté de son extension supérieure longitudinale 25, épouse précisément le contour inférieur des sièges adjacents pour une meilleure intégration et pour faciliter les mouvements de rangement et d'extraction des panneaux.

Le séparateur 100 présente ainsi une conception permettant un passage d'une cloison entièrement déployée à une surface complètement dégagée, sans aucune pièce en saillie susceptible de perturber l'espace de couchage lorsque les sièges adjacents sont utilisés en position lit double.

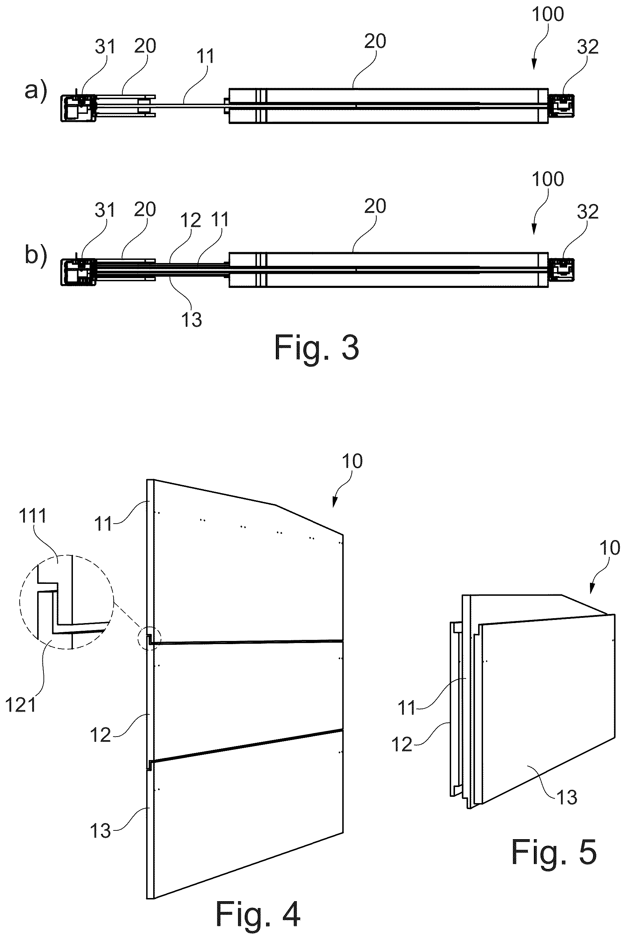

La figure 3 permet de mieux visualiser l'agencement des panneaux 11, 12 et 13 dans les deux positions du séparateur 100.

Plus précisément, la vue (a) illustre la position fermée du séparateur 100, dans laquelle les trois panneaux 11, 12, 13 sont parfaitement superposés dans un même plan vertical. Du fait de cette superposition coplanaire, seul le panneau supérieur 11 est directement visible dans cette vue. Cette disposition assure une cloison homogène et continue sur toute la hauteur du séparateur.

La vue (b) de la figure 3 correspond quant à elle à la position ouverte du séparateur 100. Elle permet de visualiser clairement la juxtaposition parallèle des trois panneaux mobiles 11, 12 et 13 rangés dans le logement de stockage 20. Cette vue met notamment en évidence la disposition en sandwich mentionnée précédemment, avec le panneau 11 situé dans un plan central intermédiaire, tandis que les panneaux 12 et 13 sont rangés chacun dans un plan latéral de part et d'autre de ce panneau central.

La figure 4 représente une vue isolée des panneaux 11, 12 et 13 constituant la cloison 10. Cette illustration permet une meilleure compréhension de la géométrie individuelle et du mode d'assemblage de ces panneaux en position fermée. Chaque panneau est doté sur ses bords horizontaux opposés d'un profil spécifique assurant un assemblage par recouvrement à feuillure.

Plus précisément, le panneau 11 présente une feuillure 111 s'imbriquant précisément avec une feuillure complémentaire 121 formée sur le panneau adjacent 12. Ce principe d'assemblage, similaire entre chaque paire de panneaux successifs, garantit à la fois une rigidité structurelle et une isolation accrue entre les passagers, évitant tout espace libre ou discontinuité dans la cloison déployée. La figure 5 représente la cloison 10 repliée dans une position de stockage, avec les panneaux 11, 12 et 13 juxtaposés parallèlement et occupant sensiblement une même hauteur. Ainsi, la cloison 10 repliée peut être rangée dans un volume de hauteur réduite par rapport à la hauteur maximale atteignable par ladite cloison déployée. Dans l'exemple illustré, la hauteur occupée par la cloison repliée ne dépasse pas celle du panneau 11, qui est sensiblement égale à la hauteur des autres panneaux, et qui correspond donc au tiers environ de la hauteur maximale de séparation.

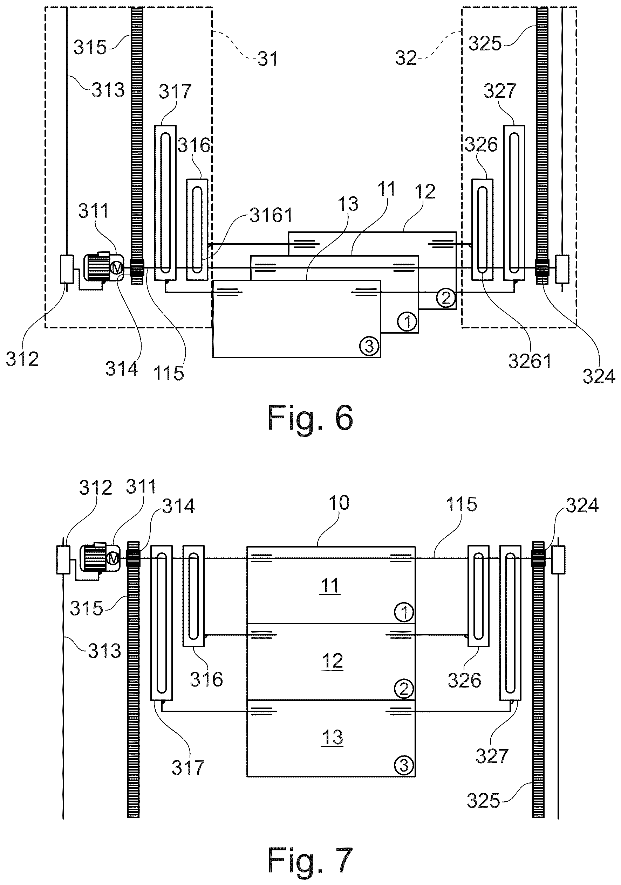

La figure 6 représente le schéma cinématique général du mécanisme d'actionnement du séparateur 100, illustré en position ouverte. Le mécanisme comprend un moteur 311 électrique rotatif, fixé sur un support 312. Le support 312 est lui-même monté sur une glissière verticale 313 intégrée dans le premier caisson 31 qui est destiné à être fixé à l'un des sièges adjacents.

Le moteur 311 entraîne en rotation un pignon 314, monté sur un axe longitudinal 115 traversant intégralement le premier panneau 11. Ce pignon 314 coopère avec une crémaillère fixe 315, solidarisée au caisson 31, pour assurer un déplacement vertical précis du moteur 311 et par conséquent du panneau 11.

À l'extrémité opposée de l'axe 115, un second pignon 324 est prévu, lequel est en liaison pignon-crémaillère avec une seconde crémaillère fixe 325 intégrée au deuxième caisson 32, positionné à l'opposé du premier caisson 31 et destiné, par exemple, à être fixé à l'un des ottomans des sièges adjacents.

Une chape 3261 permet d'assurer une liaison pivot-glissant entre ce deuxième pignon 324 et le caisson 32. Ainsi, le déplacement du panneau 11 est symétriquement guidé, évitant ainsi tout phénomène d'arc-boutement lors de son déplacement vertical.

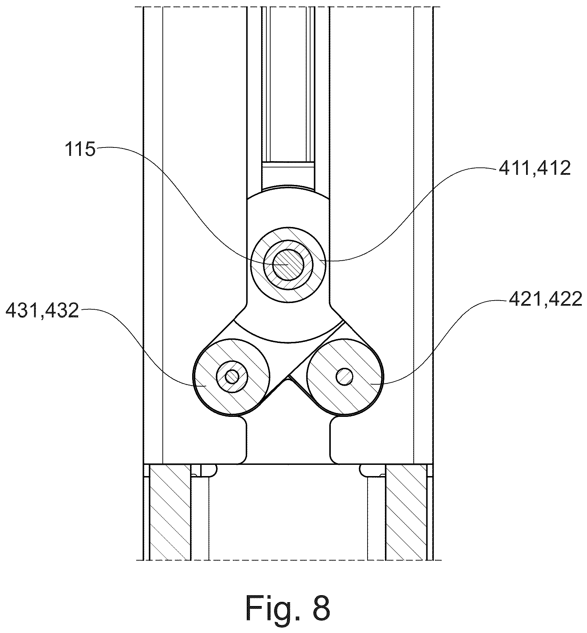

La figure 7 représente le schéma cinématique du séparateur en position fermée, illustrant les liaisons assurant l'entraînement successif des panneaux 11, 12 et 13 durant la phase de déploiement. Plus précisément, l'axe 115 est équipé de deux bagues de guidage opposées, référencées respectivement 411 et 412 sur la figure 8, permettant un coulissement précis dudit axe dans des fentes formées au sein des caissons 31 et 32.

En outre, l'axe 115 comprend un ensemble de bobines qui coopèrent successivement avec des ensembles de tôles spécifiquement profilées. Un premier ensemble de tôles 316 et 326 est positionné de part et d'autre des panneaux, chaque tôle comportant une fente oblongue permettant le guidage coulissant des bobines. Les tôles 316 et 326 sont reliées au deuxième panneau 12 par une liaison pivot-glissant équipée de deux bagues de guidage, référencées 421 et 422 sur la figure 8.

Lors du mouvement vertical du panneau 11, lorsque les bobines de l'axe 115 atteignent les butées des fentes des tôles 316 et 326, le deuxième panneau 12 est entraîné verticalement à son tour.

Toujours en référence à la figure 7, un second ensemble de tôles 317 et 327 est fixé symétriquement sur les côtés opposés du panneau intermédiaire 12. Ces tôles comportent également des fentes oblongues analogues aux premières, dans lesquelles une deuxième partie des bobines vient coulisser. Ces tôles 317 et 327 sont fixées sur le troisième panneau 13 via une liaison pivot-glissant comportant deux bagues de guidage, référencées 431 et 432 sur la figure 8. Ainsi, après que les bobines aient atteint les extrémités des fentes des tôles 317 et 327, le troisième panneau 13 est entraîné verticalement et vient s'aligner parfaitement avec les deux autres panneaux déjà déployés, constituant ainsi la cloison 10 complète et coplanaire.

La figure 8 détaille précisément le système de guidage interne au sein du caisson 31 (le mécanisme étant symétrique dans le caisson 32). L'axe 115 est équipé des deux bagues 411 et 412, qui assurent un guidage précis dans une fente longitudinale pratiquée dans le caisson 31. Deux autres bagues de guidage complémentaires 421 et 422 coopèrent avec les tôles intermédiaires 316 et 326 lors du mouvement de déploiement des panneaux successifs tel que représenté sur les figures 6 et 7.

Enfin, deux dernières bagues 431 et 432 permettent d'assurer le guidage du troisième panneau 13 dans sa phase finale de déploiement et lors de son rangement. Lors de la descente du séparateur vers sa position ouverte (position rangée), les bagues 431 et 432 du troisième panneau 13 coulissent dans deux fentes spécifiques permettant d'orienter précisément ce panneau vers son emplacement de stockage. Les bagues 421 et 422 du deuxième panneau 12 sont quant à elles guidées d'un côté par les mêmes fentes que celles du troisième panneau, et de l'autre côté par les bagues 431 et 432 elles-mêmes, assurant ainsi un triage automatique précis des trois panneaux lors de leur repliement dans le logement de stockage.

Le mécanisme d'actionnement ainsi décrit, basé sur des jeux successifs de liaisons pignon-crémaillère et de guidages précis par bagues et tôles à fentes oblongues, garantit à la fois un déploiement régulier, un alignement précis des panneaux et un rangement optimisé, tout en réduisant considérablement la complexité mécanique par rapport aux solutions connues dans l'état de la technique.

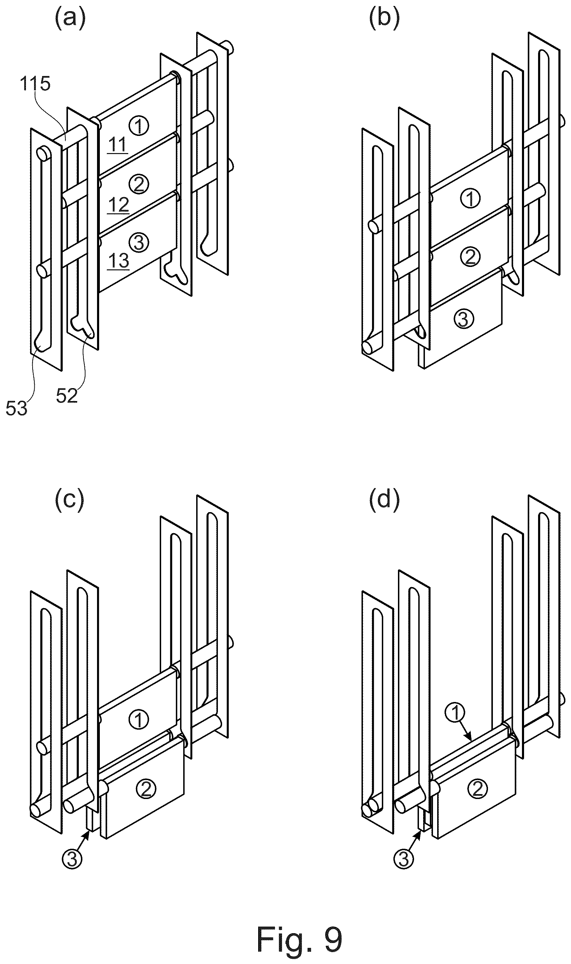

La figure 9 représente schématiquement la séquence cinématique permettant le rangement ordonné des panneaux 11, 12 et 13 dans leur position ouverte au sein du logement de stockage. Pour réaliser ce rangement, chaque panneau comporte des axes équipés de bobines coopérant avec des fentes de coulissement. Ces fentes possèdent des extrémités inférieures spécifiquement profilées, désignées par les références 52 et 53, destinées à guider et à contraindre successivement les panneaux dans leur position finale respective.

Dans la configuration (a), les panneaux 11, 12 et 13 sont dans leur position alignée initiale correspondant à la position fermée du séparateur. Dans cette configuration, les axes munis des bobines sont tous alignés dans les parties supérieures rectilignes des fentes. Le début de la séquence de rangement se fait par un déplacement vertical descendant du groupe de panneaux.

Dans la configuration (b), au fur et à mesure que les panneaux descendent, les axes atteignent progressivement les zones inférieures des fentes. L'extrémité inférieure 53 présente une bifurcation latérale dirigée vers la gauche, ce qui contraint ainsi l'axe associé au panneau inférieur 13 à se déplacer latéralement vers cette branche gauche. Ce guidage précis entraîne une déviation latérale du panneau 13 par rapport au panneau intermédiaire 12 et au panneau supérieur 11. Dans la configuration (c), la descente des panneaux se poursuit, et les axes associés aux panneaux atteignent progressivement l'extrémité inférieure 52 des fentes. Cette extrémité 52 comporte deux branches latérales, une vers la gauche et une vers la droite. L'une de ces branches est déjà occupée par l'axe du panneau inférieur 13 précédemment dévié. La seconde branche latérale disponible reçoit alors l'axe du panneau intermédiaire 12, provoquant un décalage latéral opposé de ce panneau par rapport au panneau 13. À ce stade, les deux panneaux inférieurs (12 et 13) se trouvent donc dans deux plans latéraux parallèles et distincts.

Enfin, la configuration (d) montre la position finale du rangement des panneaux. Dans cette dernière étape, le panneau supérieur 11 continue sa descente pour prendre place dans un plan central situé entre les deux plans latéraux occupés par les panneaux 12 et 13. Ainsi, à l'issue de cette séquence de rangement, les trois panneaux occupent précisément les trois positions parallèles juxtaposées selon la configuration en sandwich précédemment décrite.

Il est à noter que le mouvement inverse, à savoir un déplacement vertical ascendant des panneaux à partir de la configuration (d), conduit de manière automatique et symétrique à l'alignement progressif des trois panneaux 11, 12 et 13 dans un même plan vertical, défini par la partie supérieure rectiligne des fentes. Ce mécanisme permet ainsi une transition fiable et répétable entre les positions ouverte et fermée du séparateur en minimisant les risques de blocage.

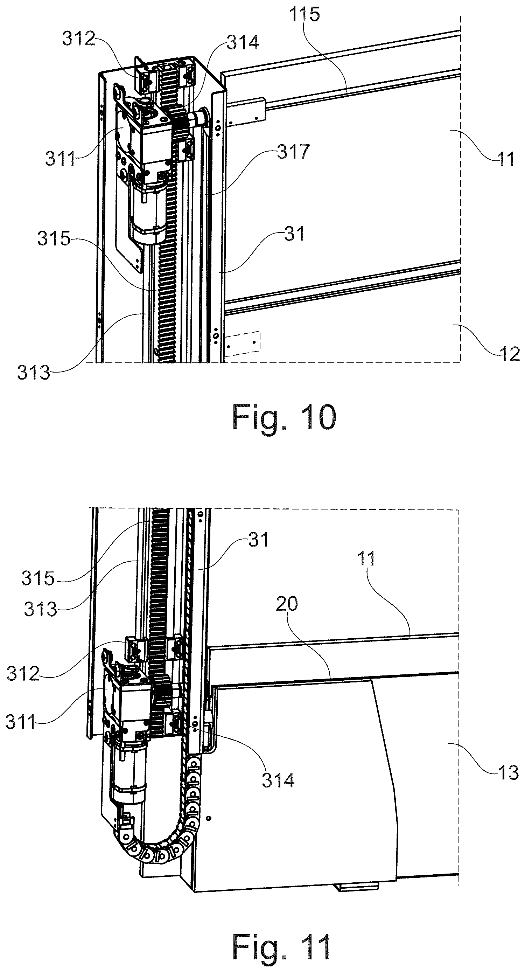

La figure 10 représente une vue détaillée de la partie supérieure du mécanisme d'actionnement intégré dans le premier caisson 31, en position haute du séparateur (position fermée). Le mécanisme comprend notamment le moteur électrique rotatif 311 fixé rigidement sur le support 312, lui-même monté sur la glissière verticale 313, permettant un déplacement de l'ensemble moteur/support dans le sens vertical. Ce déplacement est assuré par une liaison pignon-crémaillère formée par le pignon d'entraînement 314, monté sur l'axe longitudinal 115 du moteur 311, et la crémaillère verticale fixe 315 intégrée au caisson 31. La rotation du moteur 311 provoque ainsi une translation du moteur lui-même, entraînant simultanément le déplacement vertical du panneau supérieur 11 auquel est solidaire l'axe 115. On distingue également les tôles de guidage à fentes oblongues 317, destinées à assurer le guidage du mouvement des panneaux lors de leur déplacement.

La figure 11 montre une vue similaire à celle de la figure 10, mais avec le mécanisme en position basse, correspondant à la position de rangement (position ouverte) du séparateur. Le moteur 311 ici, toujours fixé au support 312, a été déplacé vers le bas le long de la glissière 313, grâce à la coopération du pignon 314 et de la crémaillère 315. Dans cette position, les panneaux mobiles (ici illustrés par les panneaux 11 et 13) sont entièrement rangés dans le logement de stockage 20 situé sous la surface horizontale des sièges adjacents. Afin d'assurer une protection et une gestion optimale des câbles électriques durant les déplacements répétés du moteur 311, une chaîne porte-câbles articulée peut être prévue pour accompagner verticalement le mouvement du moteur.

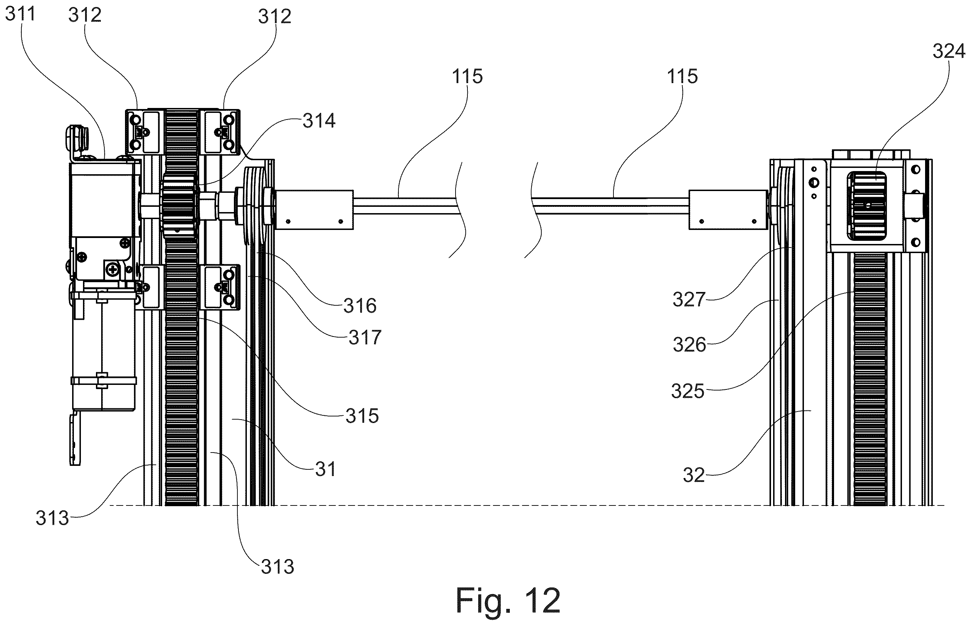

La figure 12 représente une vue complète et symétrique du mécanisme d'actionnement des panneaux, reliant les deux caissons opposés 31 et 32 par l'axe longitudinal 115 traversant les panneaux mobiles. Comme précédemment décrit, du côté du premier caisson 31, l'axe 115 est solidaire du pignon d'entraînement 314 coopérant avec la crémaillère verticale fixe 315. Des glissières 313, associées à des patins fixés sur le support 312, garantissent un guidage linéaire précis de l'ensemble moteur/support durant ses déplacements. La figure montre également clairement les tôles de guidage intermédiaires 316 et 317 disposées dans le caisson 31.

À l'extrémité opposée de l'axe 115, le mécanisme comprend le second pignon 324 en liaison pignon-crémaillère avec la deuxième crémaillère verticale fixe 325 intégrée au deuxième caisson 32. Comme pour le premier caisson, des tôles de guidage symétriques, ici référencées 326 et 327, sont présentes pour assurer un déplacement parfaitement symétrique et sans contraintes latérales des panneaux.

## Revendications

1. Séparateur (100) d'espaces entre deux sièges adjacents pour passagers d'aéronef, comprenant plusieurs panneaux (11, 12, 13) mobiles et un logement (20), ledit séparateur présentant une position fermée dans laquelle les panneaux sont déployés pour former une cloison (10) rigide séparant les deux sièges et une position ouverte dans laquelle les panneaux sont rétractés et stockés dans le logement (20) laissant communicants les deux sièges, ledit séparateur étant **caractérisé en ce que** :
les panneaux (11, 12, 13) sont configurés pour, en position fermée, être alignés dans un même plan et, en position ouverte, être juxtaposés parallèlement selon des plans distincts ;
il comprend un mécanisme d'actionnement assurant le passage d'une position à l'autre et comprenant au moins un moteur (311) entraînant un axe (115) traversant un premier panneau (11), et des moyens de guidage (316, 317, 326, 327) contraignant les panneaux à se déplacer verticalement et à s'aligner ou à se juxtaposer automatiquement durant leur déplacement.

2. Séparateur selon la revendication 1, dans lequel les moyens de guidage comprennent un premier ensemble de tôles (316, 317) et un deuxième ensemble de tôles (326, 327), lesquels ensembles étant parallèles et placés d'un côté et de l'autre des panneaux, lesdites tôles comportant des fentes oblongues dans lesquelles coulissent des bagues de guidage (411, 412, 421, 422, 431, 432) solidaires des panneaux, permettant un entraînement successif desdits panneaux lors de leur déplacement.

3. Séparateur selon la revendication 2, dans lequel les fentes oblongues présentent des extrémités inférieures (52, 53) comprenant des bifurcations latérales configurées pour contraindre chaque panneau à se positionner automatiquement dans un plan spécifique lors du rangement dans le logement (20).

4. Séparateur selon l'une quelconque des revendications précédentes, dans lequel le moteur (311) est fixé sur un support (312) monté mobile verticalement par rapport à un premier caisson (31) au moyen d'une liaison pignon-crémaillère comprenant un pignon (314) monté sur l'axe (115) entraîné par le moteur, et une crémaillère fixe (315) solidarisée au premier caisson (31).

5. Séparateur selon la revendication 4, dans lequel l'axe (115) comprend à son extrémité opposée au moteur (311) un second pignon (324) coopérant avec une seconde crémaillère fixe (325), ladite seconde crémaillère étant intégrée à un deuxième caisson (32), garantissant un entraînement symétrique de l'axe (115) et évitant tout phénomène d'arc-boutement.

6. Séparateur selon l'une quelconque des revendications précédentes, dans lequel chaque panneau (11, 12, 13) présente, sur au moins l'un de ses bords horizontaux, un profil complémentaire formant en position fermée un assemblage par recouvrement à feuillure (111, 121) avec un panneau adjacent, assurant ainsi une rigidité et une isolation visuelle maximale de la cloison (10).

7. Séparateur selon l'une quelconque des revendications précédentes, dans lequel le logement (20) est configuré pour stocker les panneaux (11, 12, 13) en position ouverte selon une hauteur égale à la hauteur d'un seul panneau, réduisant ainsi l'encombrement vertical du séparateur en position ouverte.

8. Séparateur selon l'une quelconque des revendications précédentes, dans lequel les panneaux (11, 12, 13) sont au nombre de trois, un panneau intermédiaire (12) étant disposé, en position ouverte, dans un plan central situé entre deux plans latéraux respectivement occupés par les deux autres panneaux (11, 13), formant ainsi une configuration compacte de rangement en sandwich dans le logement (20).

9. Unité de sièges pour passagers d'aéronef, comprenant deux sièges adjacents convertibles en lit et **caractérisée en ce qu'**elle comprend un séparateur selon l'une des revendications précédentes, ledit séparateur étant placé entre les deux sièges.

10. Unité de sièges selon la revendication 9, dans laquelle le logement (20) est disposé sous une surface horizontale formant une surface de couchage des sièges en position lit, de sorte que les panneaux (11, 12, 13), lorsqu'ils sont rangés dans ledit logement (20), restent intégralement sous ladite surface de couchage, et dans laquelle la cloison (10) formée par les panneaux déployés en position fermée s'étend longitudinalement selon une longueur (L) correspondant à la totalité de la longueur de ladite surface de couchage.
